# EUROPEAN PATENT APPLICATION

(11) **EP 4 789 883 A1**
(43) Date of publication of application: **12.08.2026**
(21) Application number: 25155924.1
(22) Date of filing: 05.02.2025
(51) Int. Cl.: B60J 7/02, B60J 7/043, B60J 7/19

(54) **ROOF SYSTEM FOR A VEHICLE**

(71) Applicant: Inalfa Roof Systems Group B.V., 5807 GW Oostrum (NL)
(72) Inventor: Geurts, Ruud, 5988 HA HELDEN (NL)
(74) Representative: De Vries & Metman

(57) **Abstract**

Roof system for a vehicle (1) having at least a first panel (4) movable for closing a roof opening (3) in a closed position, with an operating mechanism (10) for the first panel (4) comprising a driving slide (23), a front mechanism (20), the front mechanism (20) including a front lever (21) which is hingeably connected to a panel bracket (22) attached to the first panel (4). The operating mechanism (10) further comprises a tilting mechanism (24) capable of moving the rear edge of the first panel (4) in a vertical direction. The tilting mechanism (24) is provided with a support member (71) projecting longitudinally therefrom in a forward direction and, in the closed position of the first panel (4), directly or indirectly engaging the panel bracket (22) at a location in the vicinity of the hingeable connection between the front lever and the panel bracket, for preventing or at least limiting an upward movement of the first panel (4) in its closed position.

## Description

The invention relates to a roof system according to the preamble of claim 1.

In such a roof system the first panel in its closed position will be subject to considerable forces acting in an upward direction when the vehicle is moving at high speeds. Such forces, among others, may arise from the creation of low pressure areas above the roof of the moving vehicle. Such forces generally will lead to a vertical displacement of the first panel (caused, for example, by the fact that the position where vertical forces act on the first panel, or its panel bracket, and the location where resulting vertical forces act on the front lever, are staggered in a lateral direction). There is an ongoing demand to limit such vertical displacements of the first panel, even at very high speeds (for example up to 300 km/h). This demand is aggravated by the fact that modern roof systems have increasingly smaller vertical dimensions, such that even a limited vertical displacement of the first panel could have very detrimental effects on the performance of the roof system and the vehicle in general.

It is therefore an object of the present invention to provide an improved roof system.

For this purpose, the roof system according to the invention, is characterized as stated in the characterizing part of the main claim.

As a result an additional support for the first panel in its closed position is provided, which eliminates, or at least limits any upward movements (vertical displacements) of the first panel. Because the support member is provided on the tilting mechanism which is located at the same side of the front lever as the panel bracket, an engagement between the support member and panel bracket may easily be accomplished without an increase in the overall height of the roof system (which would occur when such a support member would be attached to the driving slide which is located at the other side of the front lever).

In one embodiment in which the tilting mechanism comprises a sliding guide slidably guided in the guide rail, the support member is attached to said sliding guide.

In another embodiment the panel bracket is provided with a support part extending transversally therefrom and embodied for cooperation with the support member in the closed position of the first panel. Such a support part will have a limited length in the longitudinal direction, as a result of which it will disengage the support member already after a small relative displacement between the support member and support part in the longitudinal direction (when the operating mechanism is active for opening the first panel).

It is conceivable, for example, that the support member is provided with a forward tab extending transversally and embodied for cooperation with the support part in the closed position of the first panel. Such a forward tab generally also will have a limited length in said longitudinal direction, with a similar beneficial effect.

In an exemplary embodiment the support member is embodied as an L-beam with a vertical leg and a horizontal leg, wherein the horizontal leg is provided with the forward tab.

For improving the manner in which the forward tab and support part come into engagement with each other, it is possible that the forward tab has a convex lower side intended for engaging the (upper side of the) support part in the closed position of the first panel. Specifically, it is possible that the forward tab is embodied as a substantially cylindrical part.

The support part may be a separate part attached to the panel bracket (for example by welding, screws or rivets) or the support part may be an integral part of the panel bracket (wherein the support part, for example, may be made of a wall part of the panel bracket partly separated therefrom by a cutting line and bent away therefrom).

The roof system according to the invention will be further elucidated with reference to the drawings showing embodiments of the roof system by way of example only.
Figs. 1a and 1b are schematic perspective views of a vehicle roof having a roof system of which a panel is shown in closed and open positions, respectively.
Fig. 2 is a plan view of a part of the vehicle roof of Fig. 1a without the panel, and with a frame.
Fig. 3a and 3b are exploded views of the parts of the operating mechanism for the panel of the roof system of Fig. 2, on a larger scale and viewed from the laterally outside and inside, respectively.

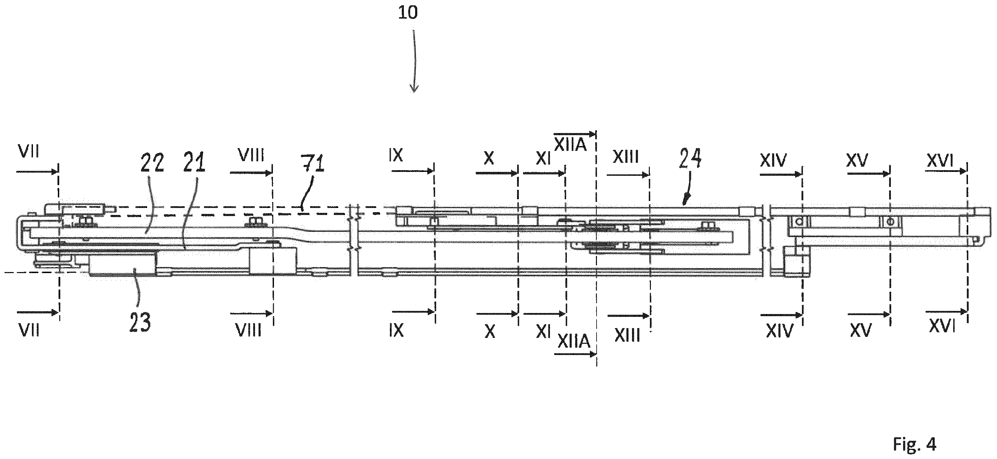

Fig. 4 is a plan view of the operating mechanism of Fig. 3 without the guide rail in which it is mounted.
Figs. 5a - 5c and 6a - 6c are side views from the outside and the inside, respectively, of the operating mechanism of Fig. 4 in three different positions without the guide rail.
Figs. 7 - 12A and 13-16 are enlarged sectional views along the lines VII to XIIA and XIII to XVI in Fig. 4.
Figs. 12B is a sectional view along line XIIB in fig. 2.
Fig. 17 is a sectional view taken across the guide rail with the panel in a slide position showing the front slide shoes.

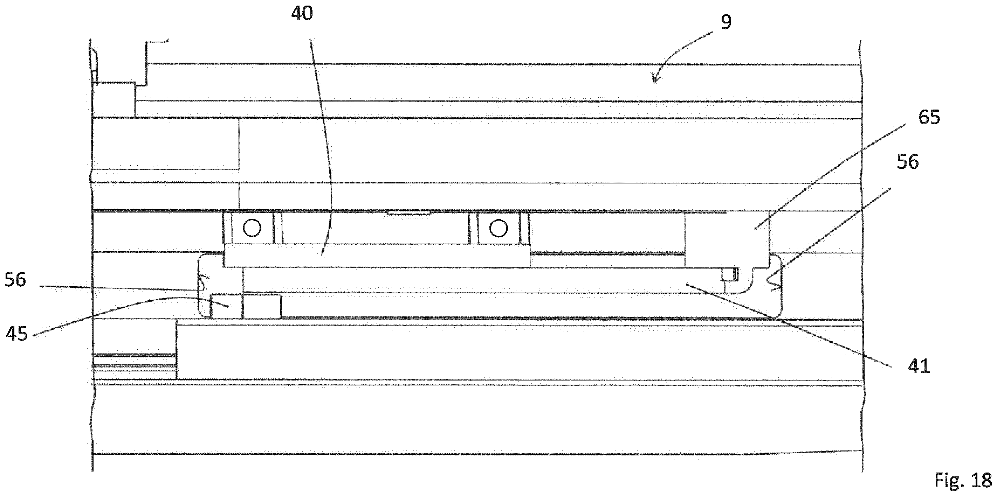

Fig. 18 is a plan view of a rear part of the operating mechanism showing the locking mechanism and part of the guide with a service hole.
Figs. 19 and 20 are sectional views along the lines XIX respectively XX in fig. 2.
Fig. 21 is a true side view on the sliding guide looking from the lateral outward side towards the center of the vehicle.
Fig. 22 is a true side view of the locking slot.
Fig. 23 is a true side view of the locator.
Figs. 24 and 25 show a perspective view and side elevational view, respectively, of an embodiment of a support member.
Figs. 26 and 27 show a perspective view and side elevational view, respectively, of another embodiment of a support member.
Fig. 28 shows an embodiment of a support part attached to a panel bracket.
Fig. 29 shows an alternative embodiment with a support part and with a tilt support part.

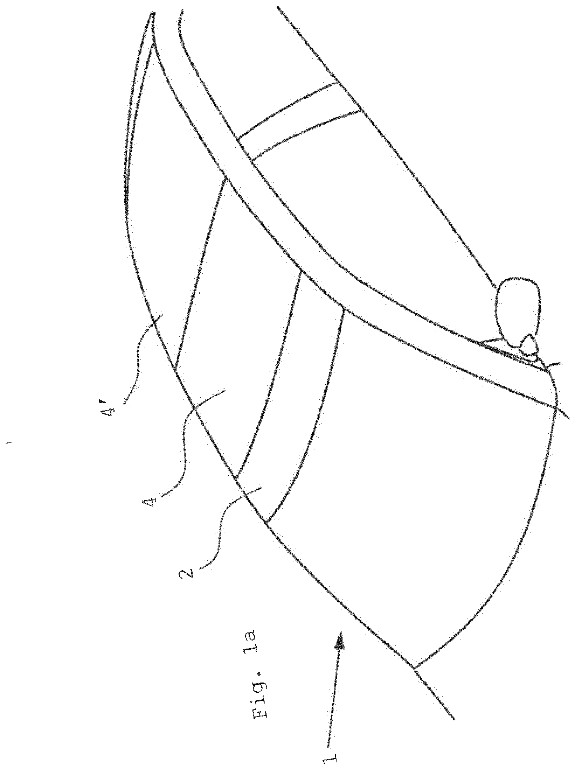

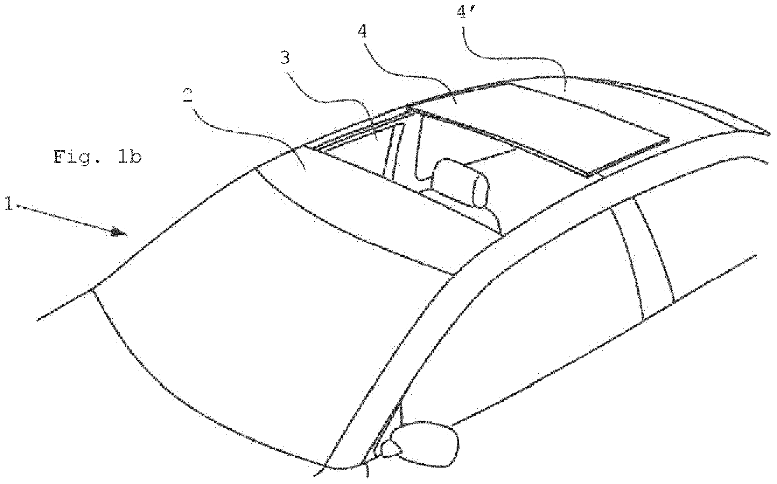

Firstly, referring to Figs. 1a and 1b, a roof system is schematically illustrated. In a fixed roof 2 of a vehicle 1 a roof opening 3 is defined which can be closed (Fig. 1a) and opened (Fig. 1b) by a movable closure, here a rigid, at least partly (semi)transparent first panel 4, made of glass, plastic or the like. The roof system may include a second panel 4' which is generally a fixed panel but may also be movable as well.

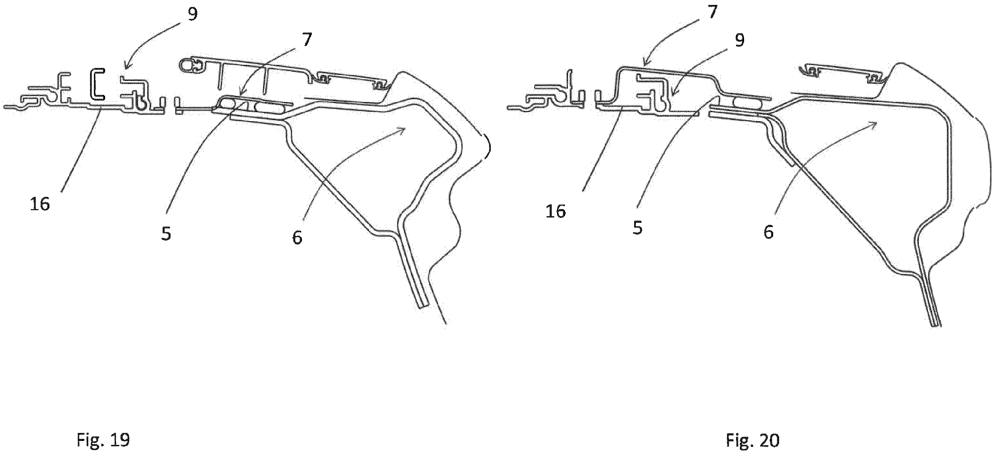

The roof system is a so-called top-loaded roof system in which a stationary part 7 of the roof system is introduced onto the roof opening 3 from above, and is resting on the fixed roof 2, normally a flange 5 of a roof beam 6, see Fig. 19 and 20. The stationary part 7 is attached to the fixed roof 2 of the vehicle 1 in a suitable manner, preferably gluing, but also welding and bolting would be possible, depending on the materials used.

The roof system shown here is a so-called spoiler roof in which panel 4 is movable from its closed position upwardly (at least with its rear side) and then rearwardly to positions above the fixed roof 2, or in this case above rear panel 4'. The operating mechanism 10, in particular the supports for panel 4, remains mainly within the roof opening 3, contrary to a top slider roof in which rear supports of the panel 4 slide in guide rails 9 that extend or are extended to positions behind the roof opening 3.

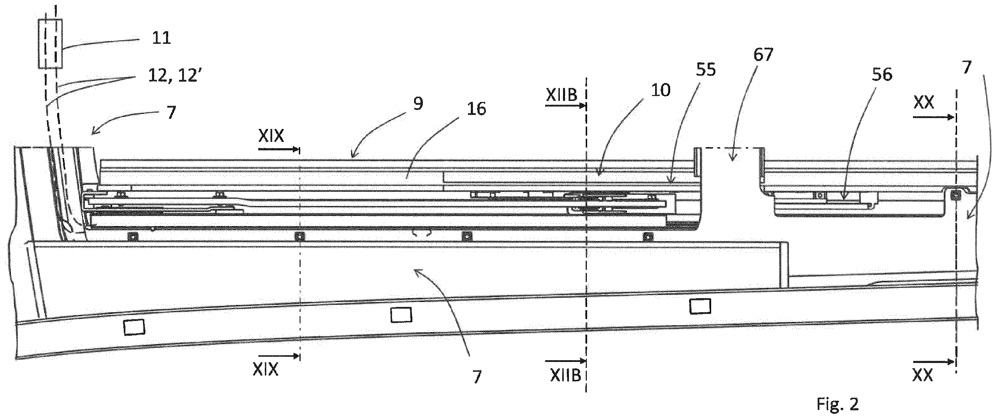

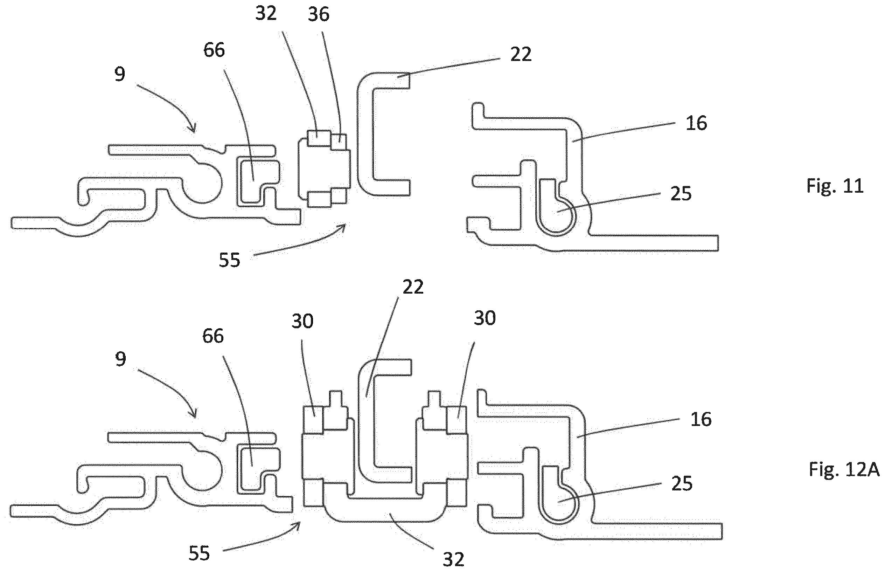

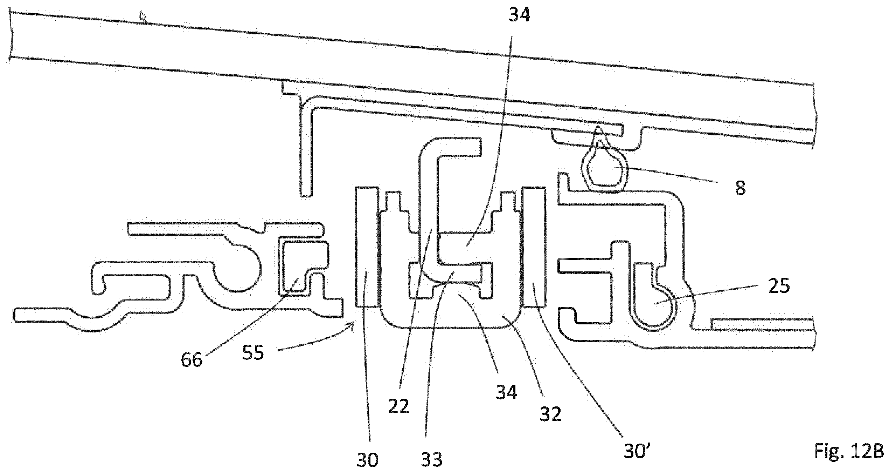

Fig. 2 shows some of the components of the roof system whereby one lateral side of the roof opening 3 is shown. A stationary part 7 forms the main component of the roof system. In this case stationary part 7 is made from plastic material by injection molding providing great freedom of design. However, it is also possible that the stationary part 7 is made of another material, for instance steel. The stationary part 7 or the guide rail 9 carry a panel seal 8 (shown in fig. 12B)) sealing panel 4 from below. Guide rail 9 is fixed to frame 7 in a longitudinal direction below each side edge of panel 4. The length of guide rail 9 is such that it extends substantially from the front to the rear of roof opening 3, whereby in case of a second panel 4', the guide rail 9 may extend all the way to the rear of the second panel 4'. An operating mechanism 10 is connected to and guided in each guide rail 9 and an electric motor 11 (shown in fig. 2) is capable of driving parts of the operating mechanisms 10 through drive cables 12, 12' (also shown in fig. 2).

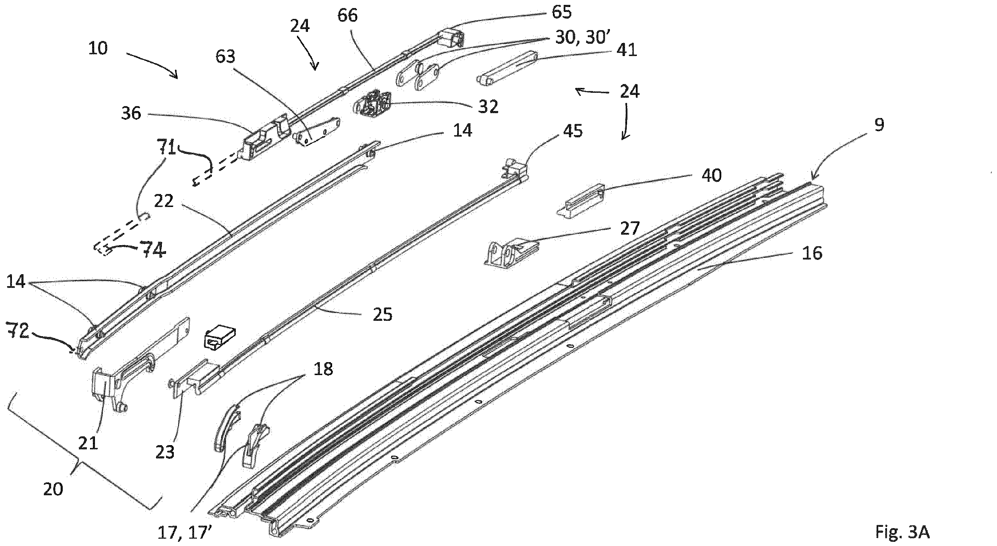

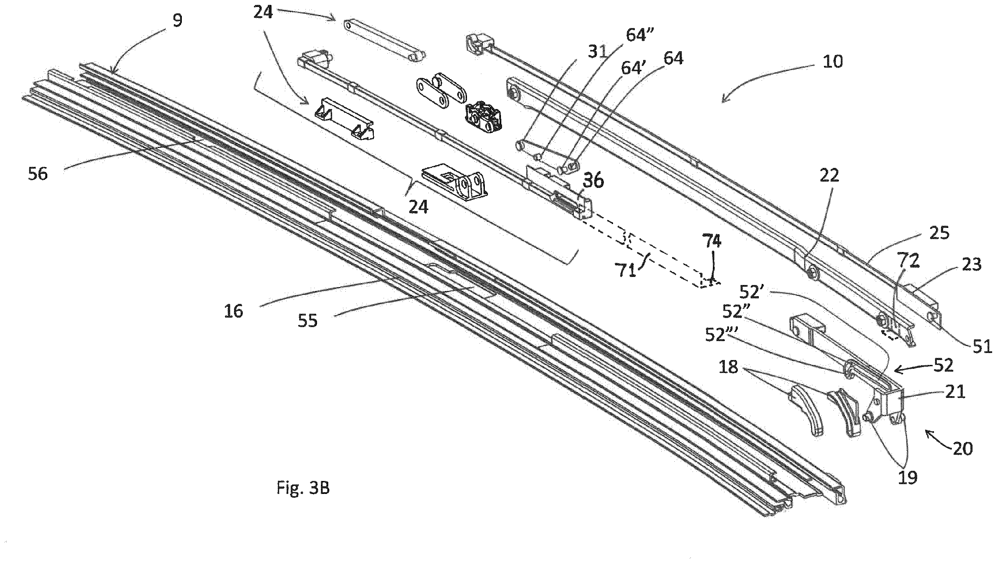

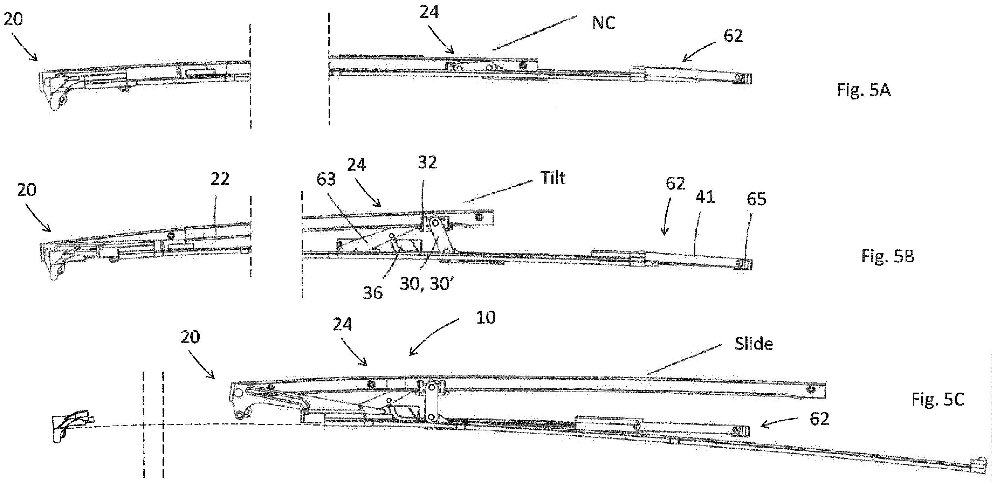

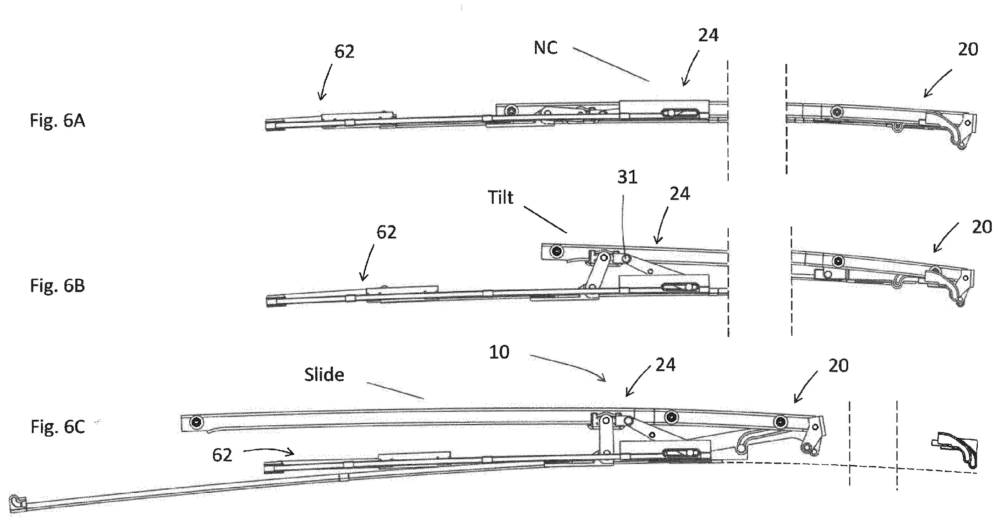

Fig. 3a and b illustrate schematically one of the guide rails 9 and operating mechanism 10. It should be kept in mind that the roof system comprises an equal guide rail 9 and operating system 10 on the opposite side, albeit configured as a mirror image. Guide rail 9 comprises an extrusion profile 16, for example from aluminum, having one or more guide grooves (17, 17', 50,) and guide channels (28, 29). The extrusion profile 16 is straight or slightly bent downwards to follow the downward curvature of fixed roof 2 of vehicle 1. Further figs. 3a and 3b show the operating mechanism 10 from respectively the lateral outward side looking inwardly into the vehicle 1 and the lateral inward side looking outwards of the vehicle 1, respectively. Operating mechanism 10 comprises a front mechanism 20, a tilting mechanism 24 and a locking mechanism 62. Each of these mechanisms has a particular function in the movement of panel 4, related to each of the positions that the panel 4 may be positioned. Figs 5A-6C show these positions as being the normal closed position (NC), the tilt position (Tilt) and the open position (Slide).

The front mechanism 20, in a closed position, is capable of locking panel 4 in a longitudinal direction. And when the rear of the panel 4 has been lifted in a vertical direction towards a so-called "tilt" position, the front mechanism 20 is capable of lifting the front of the panel 4 and subsequently capable of sliding the panel 4 rearwards in a longitudinal direction. The front mechanism 20 is driven by first drive members 12, 12' which in turn are driven by the electric motor 11.

The tilting mechanism 24 is capable of lifting the rear end of panel 4 to the tilt position and is capable of supporting panel 4 when the panel 4 moves rearward in the longitudinal direction. The tilting mechanism 24 is driven by locking mechanism 62.

The locking mechanism 62 is capable of transferring the longitudinal movement of the second drive member 25 towards the tilting mechanism 24. When the tilting mechanism 24 has reached the required tilt height of the rear end of the panel 4, the locking mechanism 62 locks the tilt mechanism 24. This means that the locking mechanism 62 functions as a mechanical lock that prevents the tilting mechanism 24 from moving further in any vertical direction going upwardly or downwardly. The locking mechanism 62 is driven by second drive member 25 which in turn is driven by the driving slide 23 of the front mechanism 20. And further the locking mechanism 62 is capable of decoupling from the second drive member 25, and the drive member 25 is capable of continuing to be moved in a longitudinal direction and therewith the front mechanism 20 to continue its longitudinal motion to slide the panel 4 to the rear (see also figs. 5A-6C).

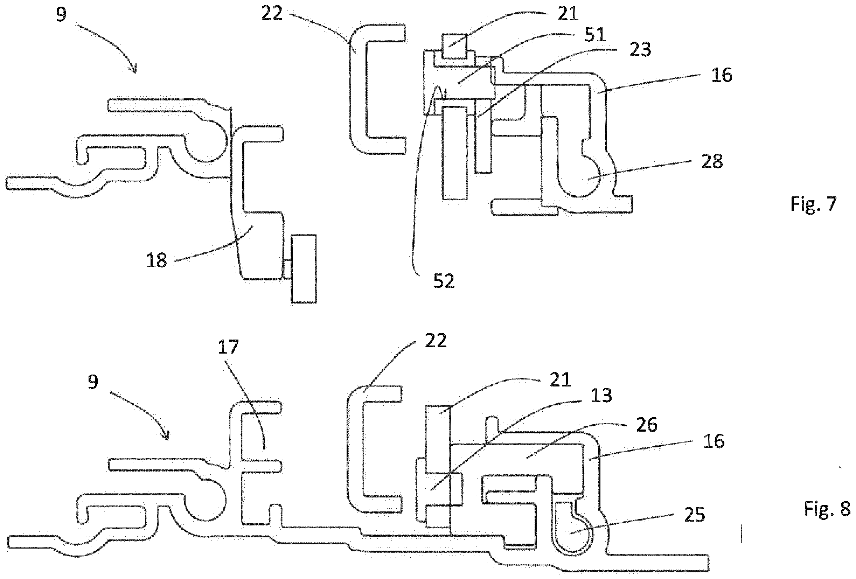

Referring to figs. 3A and 3B, the front mechanism 20 comprises a driving slide 23, slidably guided in the guide rail 9 and driven by first drive members 12, 12' and a driving cam 51 cam which is slidably connected with a curve track 52 in a front lever 21. This front lever 21, is hingeably connected by means of a pivot pin 13 to a pivot block 26 at its rear end (see fig. 8) and at an opposite front end the front lever 21 is equipped with a pair of front slide shoes 19 that are slidably guided in guide grooves 17, 17' in the guide rail 9, and when the panel 4 is in closed position the slide shoes 19 are slidably guided in a downwardly extending pair of inserts 18 which also comprise the guide grooves 17,17', albeit in a curved shape. Slide shoes 19 are attached at lateral sides of front lever 21 and are, as considered in the longitudinal direction, arranged in a staggered manner i.e., one after the other. The front end of the front lever 21 is hingeably connected with the front end of panel bracket 22. Said panel bracket 22 extends in longitudinal direction to the rear and is slidably connected to the tilting mechanism 24 via a slide claw 32. The panel bracket 22 is connected to panel 4 by means of screws 14. Basically, the driving slide 23 extends to the rear in longitudinal direction by means of a second drive member 25. Drive member 25 is basically an extension of the first drive member 12, 12', but in this case is a plastic part connected to the driving slide 23 and slidably guided in a guide channel 28 in the guide rail 9.

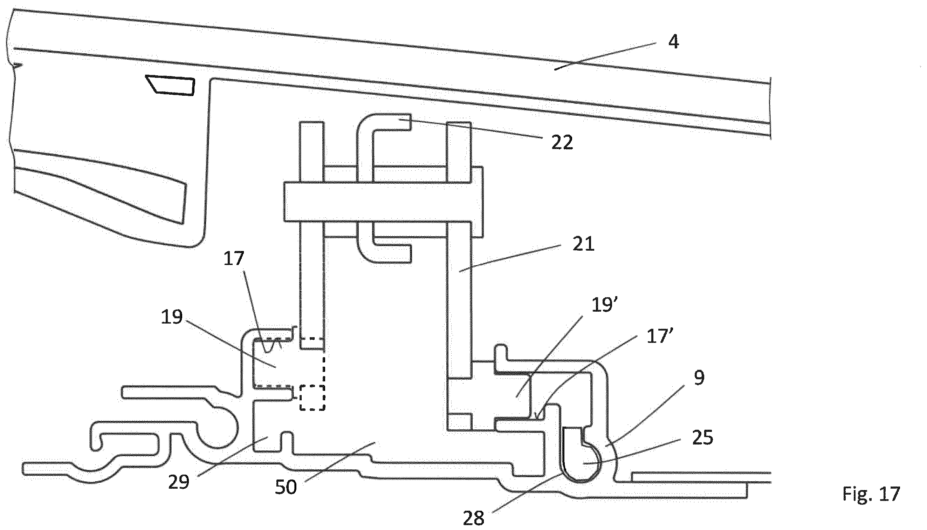

Upon movement of the first drive member 12, 12', slidably guided in a guide channel 28 in the guide rail 9, in longitudinal direction to the rear, driving slide 23 moves to the rear and the driving cam 51 on the driving slide 23 moves to the rear in the curve track 52 of the front lever 21. The curve track 52 in the front lever 21 has a first part 52' which is substantially horizontal and so the driving cam 51 slides in the first part 52' of the curved track 52 such that the front lever 21 does not move. The rear end of the curved track 52 has a second part 52" in the shape of a radius in downward direction and the third part 52"' of the curve track 52 is substantially perpendicular to the first part 52' of the track 52. By continuing the rearward movement of the cam 51 in the curve track 52, the driving cam 51 arrives in the second part 52" of the track, hence the driving cam 51 gradually starts to pull the front end of the front lever 21 in an upward direction due to the curved shape of second part 52", and when the driving cam 51 arrives in the third part 52"', the cam 51 is "locked" in the third part 52"' causing the lever 21 being pulled in a longitudinal rearward direction. The front lever 21 at its front end is hingeably connected to the front end of panel bracket 22. Thus, upon a vertical movement of the front lever 21, induced by the second part 52" of the curved track 52, the front slide shoes 19 attached at the front end will move in an upward direction following the curved guide grooves 17, 17' in the inserts 18 and likewise the front end of the panel bracket 22 follows this vertical movement, therewith raising the front edge of panel 4. Once the driving cam 51 of the driving slide 23 is in the third part 52"' of the curved track 52, the front lever 21 is pulled rearwards and the slide shoes 19 of the front lever 21 will be slidably guided into the guide grooves 17, 17' of the guide rail 9 (see also fig. 17) and thus be guided rearwardly in longitudinal direction, and along therewith the front lever 21 and the panel bracket 22. Thus, in this manner panel 4 will be opened gradually.

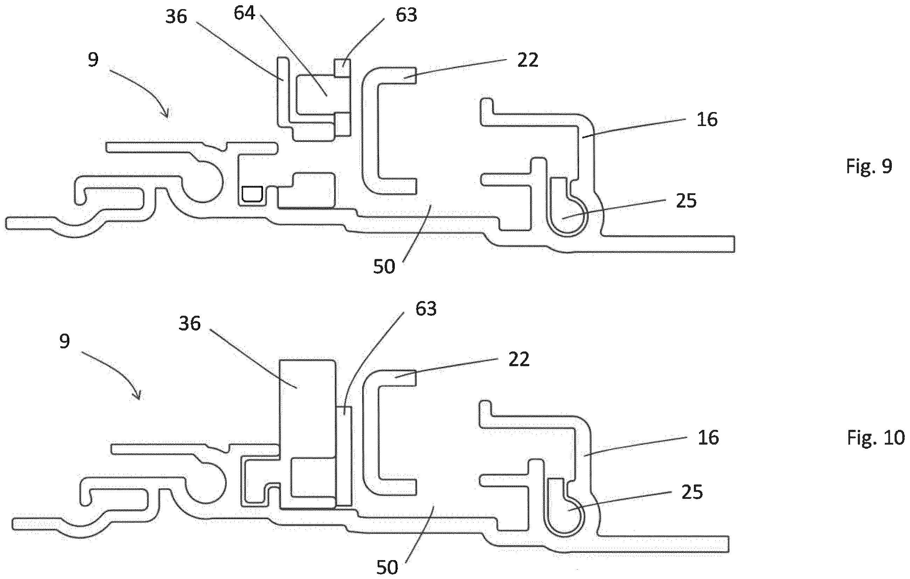

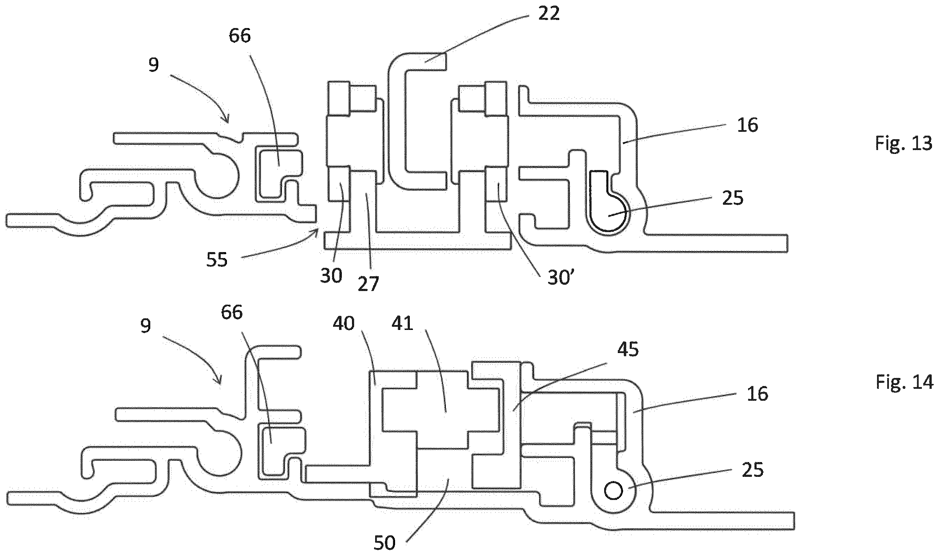

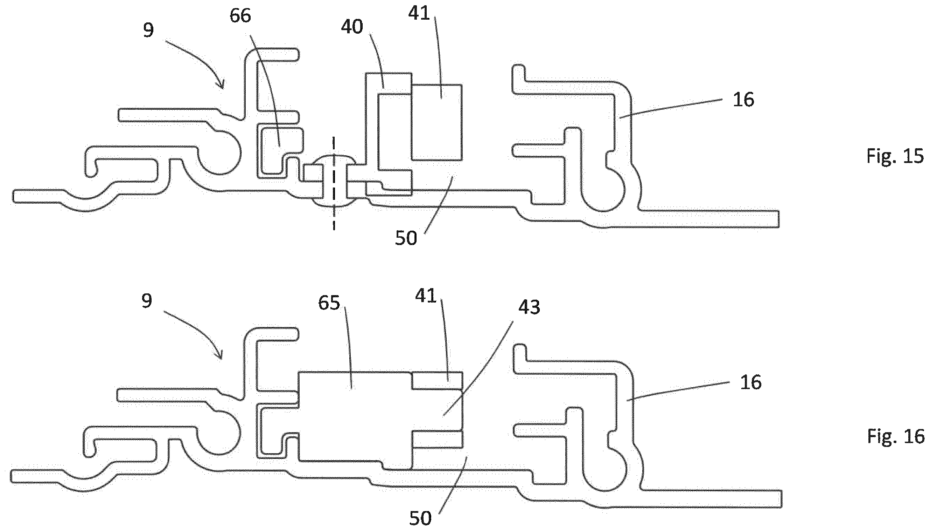

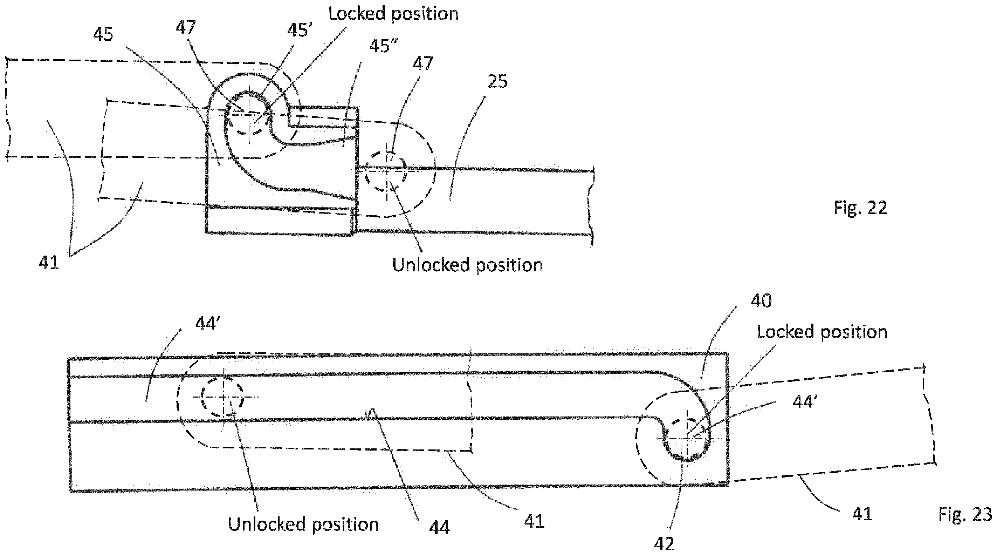

When panel 4 is in its closed position the tilting mechanism 24 is folded flat substantially within the guide rail 9 (see figs. 9-13). The same applies for the locking mechanism 62 which is arranged in guide groove 50 (see figs. 14, 15 and 16). As can be seen from these figures, there is plenty of space for the arrangement of the locking mechanism 62 right at the center of guide rail 9. Second drive member 25, upon movement to the rear, slides in guide channel 28 rearwards. Second drive member 25 is releasably engaged with locking lever 41, and thus locking lever 41 slides to the rear too. Locking lever 41 is equipped with a locking cam 47 at its front end on one lateral side of the locking lever 41. Said locking cam 47 is engaged with a locking slot 45 at the end of the second drive member 25. A locking pin 42 is attached at the lateral opposite side of the locking lever 41. With reference to figs. 22 and 23, said locking pin 42 is slidably guided in a pin slot 44 of a locator 40. Locator 40 is fixedly attached to guide rail 9. Said pin slot 44 comprises basically two parts, whereby the first part 44' extends substantially in a horizontally longitudinal direction and the second part 44" extends perpendicularly towards the first part 44' in a vertical downward direction. The locking lever 41 at its rear end is pivotally connected to a hinge block 65. Said hinge block is slidably guided in a guide groove 50 of the guide rail 9 and is further connected to a connecting rod 66, which rod extends towards the tilting mechanism 24 in another guide channel 29. Upon a continued movement rearward, the locking lever 41 and therewith the locking pin 42 will move rearward in the first part 44' of the pin slot 44. Because this first part extends substantially horizontally, the rearward movement of the locking lever 41 is continued uninterrupted via the hinge block 65 onto the connecting rod 66 towards the tilting mechanism 24. When the locking pin 42 moves into the second part 44" of the locking track 44, the locking lever 41 pivots around its hinge 43 at the hinge block 65 (see fig. 16) and the front end of the locking lever 41 moves vertically in a downward direction, therewith decoupling the locking cam 47 from the locking slot 45, and thus from the second drive member 25. In case drive-member 25 is driven further rearwardly, it will continue to move without being connected to the locking lever 41. This means that the locking lever 41, being locked in the locator 40 does not further move the tilting mechanism 24 and the tilting mechanism is thus at the end of its vertical movement and is in this position supporting panel 4 in a stationary manner.

Considering the operation of the tilting mechanism 24 from the closed position of the panel 4 towards the tilted position of the panel 4 whereby the rear of the panel 4 is lifted in vertical direction. Firstly, connecting rod 66 is moved rearwards in guide channel 29 as described above. Attached to the connecting rod 66 is the sliding guide 36. This sliding guide 36 comprises three guide slots 35, 35', 35". The auxiliary lever 63 engages the sliding guide 36 by means of three guiding pins 64, 64' 64" slidably engaging the three guide slots 35, 35', 35". Guide slot 35 is positioned at the front of the sliding guide 36 and comprises a horizontal slot portion 68 and an interconnected vertical slot portion 68'. Guide slot 35' is a slot which has a substantially horizontally extending slot 69, and third guide slot 35" of the sliding guide 36 comprises a first substantially horizontal portion 70 and a subsequent upwardly curved portion 70'. The auxiliary lever 63 additionally has a pivot pin 31 at the rear end of said lever pivotally engaging the slide claw 32. Slide claw 32 has been provided with a (preferably) plastic lining 34 (see fig. 12B) which slidably circumvents the lower part of panel bracket 22 and the panel bracket guide 33. Slide claw 32 is pivotably connected to a pair of lifting levers 30, 30', which levers are at their opposite end pivotally connected to housing 27. Said housing 27 is fixedly connected to the guide rail 9. So, when the connecting rod 66 is being moved rearwardly, sliding guide 36 moves rearwardly too.

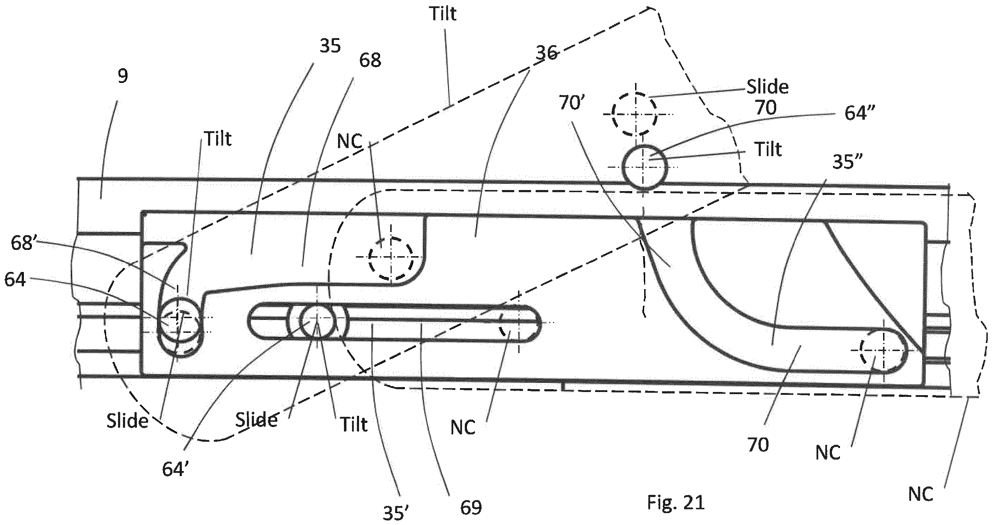

Referring now to fig. 21, due to the longitudinal movement of the sliding guide 36 the guiding pins 64, 64', 64" are forced to follow the shape of the guide slots 35, 35', 35". This means that from a longitudinal position in the guide rail 9 when the panel 4 is in its closed position, towards a position in which the panel 4 at its rear end is lifted, the auxiliary lever 63 is pivoted around a moving pivot point of guiding pin 64' in second guide slot 35' upwardly until the rear end of panel 4 has reached a lifted position. During this operation, third guiding pin 64" is guided in third guide slot 35" in an upward direction into second portion 70', thus initializing the upward movement of the auxiliary lever 63 rearward of the moving pivot point of guiding pin 64'. During this operation, first guiding pin 64 is guided firstly in the horizontal slot portion 68 of first guide slot 35 until secondly it reaches the vertical slot portion 68' in which first guiding pin 64 is guided in a downward direction. Although during the operation of lifting the rear end of the panel 4, first guiding pin 64 and second guiding pin 64' move in their respective guide slots 35, 35', third guiding pin 64" leaves the third guide slot 35" at the upper end of it. Once third guiding pin 64" is out of the third guide slot 35', the movement control and the support of the auxiliary lever 63 is taken over by the first guiding pin 64 in guide slot 35.

Regarding the vertical movement of the rear end of panel 4 it must be specified in detail that a defined "tilt" position is created in which the panel 4 has a lifted rear end but the front end of the panel 4 is still substantially closed. That means that the front end of panel 4 is still in contact with a seal 8 between the stationary part 7 and panel 4. This particular "tilt" position of panel 4 functions as a ventilation position in which the interior of vehicle 1 may be ventilated. Further when the panel 4 is driven from a "tilted" position to the rear of the roof, firstly the front end of the panel 4 will be lifted in an upward direction and the rear of the panel 4 is lifted somewhat more to a "slide" position and subsequently panel 4 is being moved to the rear of vehicle 1, thereby opening the roof opening 3.

Guide rail 9 is provided with a first and a second hole 55, 56. First hole 55 is positioned underneath the tilting mechanism 24 and provides space in vertical direction for parts of the tilting mechanism 24 when the panel 4 is in its closed position and the tilting mechanism 24 is folded substantially within the boundaries of the guide rail 9. Due to hole 55, slide claw 32 and housing 27 may be packaged in vertical sense somewhat lower compared to when these parts would have been mounted on top of the guide groove 50. The second hole 56 lies beneath locking mechanism 62. Especially when the second panel 4' is mounted by gluing, it would be very expensive to remove the glued panel in order to apply service to the locking mechanism 62. To avoid this, a cheaper solution is to use hole 56 for service of the parts of the locking mechanism 62 from below.

The roof system may further comprise a drain channel 67 to drain water that may leak between the first and second panel 4, 4'. As shown in fig. 2, the drain channel 67 usually extends in a lateral direction underneath the seal that is fitted between the first and second panel 4, 4'. The drain channel 67 functions as a gutter that collects water that may drip through the sealing and that drains the water to the lateral sides of the drain channel 67 into the wet area of the guide rail 9. The locking mechanism 62 may be placed in the guide rail 9 at least partly underneath the drain channel 67, as seen in a vertical direction.

Referring to fig. 19 and fig. 20, a section across the roof system is taken along lines XIX and XX in fig. 2. In fig. 19 stationary part 7 is shown to which guide rail 9 is attached and the stationary part 7 is connected to the body flange 5 by means of glue. In this figure the stationary part 7 lies on top of the body flange 5. This is normal with this type of top loaded roofs, which are assembled from the top onto the body. Guide rail 9 has a certain distance relative to the body flange 5 seen in lateral direction. In fig. 20 the guide rail 9 is closely adjacent to the body flange 5. The stationary part 7 is shaped such that it connects to the middle of the guide rail 9, because there is no space left to make the connection on the flange of the guide rail 9 that is adjacent to the body flange 5. The reason for this is that the guide rail 9 is moved laterally outward as much as possible towards the body flange 5 to increase the daylight opening of the roof system. However, in current bodies the roof (i.e. the so-called cant-rail) is extending in a tapered shape towards the rear of the vehicle. It is necessary to have the guide rail 9 extending in perfect straight longitudinal direction seen in a plan view. Guide rail 9 is non-parallel to the cant-rail line and therewith the body flange 5, thus the guide rail 9 will approach the body flange 5 closely in the rear of vehicle 1. It is even conceivable that the guide rail 9 is reduced in width by cutting of the laterally outward flange.

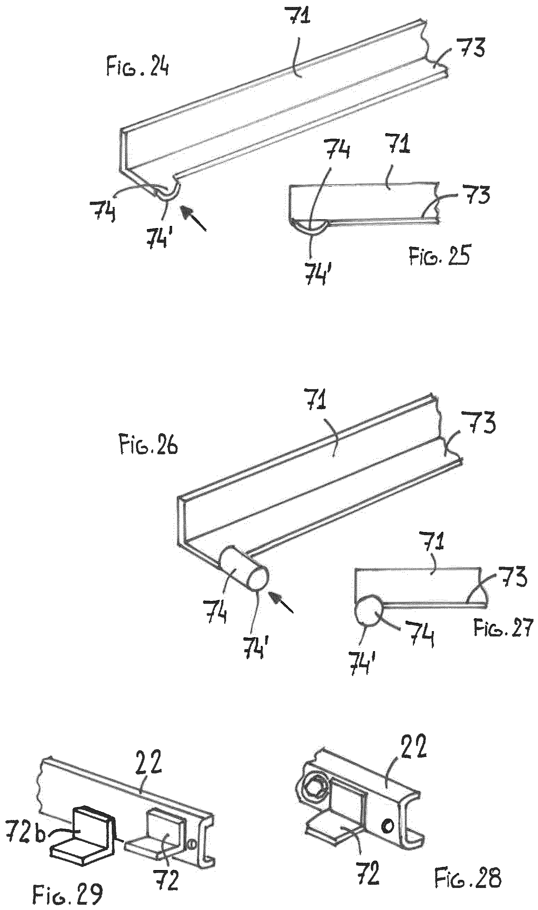

Again referring to figures 3a and 3b, one can see that the tilting mechanism 24, and specifically the sliding guide 36 thereof, is provided with a support member 71 (shown schematically and in part in broken lines) projecting longitudinally therefrom in a forward direction (apart from figures 24-28 to be discussed below, no other figure shows the support member 71 or a support part 72 to be discussed below). This support member is provided for, in the closed position of the first panel 4, directly or indirectly engaging the panel bracket 22 at a location in the vicinity of the current hingeable and slidable connection between the front lever 21 and the panel bracket, for preventing or at least limiting an upward movement of the first panel 4 at that location in its closed position. In other positions of the first panel 4 the support member may disengage the panel bracket 2 for not impeding a movement of the first panel 4 towards a tilt or open position.

The panel bracket 22 is provided with a support part 72 (likewise shown schematically and in part in broken lines) extending transversally therefrom and embodied for cooperation with the support member 71 in the closed position of the first panel 4.

In the illustrated embodiment the support member 71 is provided with a forward tab 74 extending transversally and embodied for cooperation with the support part 72 in the closed position of the first panel 4.

Referring to figures 24-27, two different embodiments of a support member 71 are illustrated (figure 25 is a view according the arrow in figure 24, and figure 27 is a view according the arrow in figure 26) in which the support member is embodied as an L-beam with a vertical leg and a horizontal leg 73, and wherein the horizontal leg is provided with the forward tab 74. In both embodiments the forward tab 74 has a convex lower side 74' intended for smoothly engaging the support part 72 of the panel bracket 22 in the closed position of the first panel 4.

In figures 24 and 25 the forward tab 24 is a curved part, and in figures 26 and 27 the forward tab 74 is embodied as a substantially cylindrical part.

In figure 28 a support part 72 is illustrated as a separate part which is attached to the panel bracket 22.

Alternatively, the support part could be an integral part of the panel bracket (for example made of a wall part of the panel bracket partly separated therefrom by a cutting line and bent away therefrom, not illustrated).

In figure 29 an alternative embodiment is shown, in which the panel bracket 22, in addition to the support part 72, is provided with a tilt support part 72b (that likewise extends transversally therefrom) and which is embodied and positioned to cooperate with the support member 71 when the first panel 4 is in the tilt position. As a result, also in such a tilt position an upward movement of the first panel 4 may be prevented or at least minimized. Preferably, for a proper operation, the tilt support part 72b will be located on the panel bracket 22 rearward of the support part 72 and at a lower level.

In such an embodiment the operation is as follows: in the closed position of the first panel 4 the support member 71 engages the support part 72. By moving the sliding guide 36 to the rear, the support member 71 will disengage the support part 72 and the first panel will move to the tilt position. In said tilt position the support member 71 now engages the tilt support part 72b. Moving the sliding guide 36 still further to the rear will disengage the support member 71 from the tilt support part 72b and will allow the first panel 4 to move to its open position.

The invention is not limited to the embodiments described before and shown in the drawings which may be varied widely within the scope of the invention as defined by the appended claims. In principle, it would be possible to combine features of the various aspects and embodiments shown and described.

## Claims

1. Roof system for a vehicle (1) having a roof opening (3) in its fixed roof (2), comprising a stationary part (7) configured to be attached to the fixed roof (2), at least a first panel (4) movably supported on the stationary part (7) and configured to close the roof opening (3) in a closed position and to be moved at least rearwardly to an opened position in which the roof opening (3) is at least partly opened, the stationary part (7) supporting guide rails (9) extending in a longitudinal direction substantially parallel to opposite lateral sides of the roof opening (3), said guide rails (9) each slidably supporting an operating mechanism (10) for the first panel (4), wherein the operating mechanism (10) comprises a driving slide (23) being driven along one of the guide rails (9) by an electric motor (11) and first drive members (12, 12', 25), the operating mechanism (10) further comprising a front mechanism (20) capable of moving the front edge of the first panel (4) in a vertical direction and moving the front mechanism (20) in said guide rail (9) for moving the first panel (4) in a longitudinal direction, the front mechanism (20) including a front lever (21) which at one end is hingeably and slidably connected to a panel bracket (22) attached to the first panel (4) and which front lever (21) at an opposite end comprises front slide shoes (19) cooperating with stationary guide grooves (17), the operating mechanism (10) further comprising a tilting mechanism (24), capable of moving the rear edge of the first panel (4) in a vertical direction, the tilting mechanism (24) including a slide claw (32) in slidable contact with the panel bracket (22), the operating mechanism (10) further comprising a locking mechanism (62) for locking the tilting mechanism (24) to the guide rail (9) in order to keep the rear mechanism (24) stationary to the guide rail (9) to enable the first panel (4) to slide with respect to the stationary tilt mechanism (24), and wherein the driving slide (23) at one hand and the tilting mechanism (24) and panel bracket (22) at the other hand are located at opposite sides of a plane extending vertically and longitudinally through the front lever (21),
**characterized in that** the tilting mechanism (24) is provided with a support member (71) projecting longitudinally therefrom in a forward direction and, in the closed position of the first panel (4), directly or indirectly engaging the panel bracket (22) at a location in the vicinity of the connection between the front lever (21) and the panel bracket, for preventing or at least limiting an upward movement of the first panel (4) at that location in its closed position.

2. Roof system according to claim 1, wherein the tilting mechanism (24) comprises a sliding guide (36) slidably guided in the guide rail (9), wherein the support member (71) is attached to said sliding guide (36).

3. Roof system according to any of the previous claims, wherein the panel bracket (22) is provided with a support part (72) extending transversally therefrom and embodied for cooperation with the support member (71) in the closed position of the first panel (4).

4. Roof system according to claim 3, wherein the support member (71) is provided with a forward tab (74) extending transversally and embodied for cooperation with the support part (72) in the closed position of the first panel (4).

5. Roof system according to claim 4, wherein the support member (71) is embodied as an L-beam with a vertical leg and a horizontal leg (73), wherein the horizontal leg is provided with the forward tab (74).

6. Roof system according to claim 4 or 5, wherein the forward tab (74) has a convex lower side (74') intended for engaging the support part (72) in the closed position of the first panel (4).

7. Roof system according to claim 6, wherein the forward tab (74) is embodied as a substantially cylindrical part.

8. Roof system according to any of the claims 3-7, wherein the support part (72) is a separate part attached to the panel bracket (22).

9. Roof system according to any of the claims 3-7, wherein the support part (72) is an integral part of the panel bracket (22).

10. Roof system according to claim 9, wherein the support part (72) is made of a wall part of the panel bracket (22) partly separated therefrom by a cutting line and bent away therefrom.

11. Roof system according to any of the preceding claims, wherein the panel bracket (22) is provided with a tilt support part (72b) extending transversally therefrom and embodied for cooperation with the support member (71) in the tilt position of the first panel (4).

12. Roof system according to claim 11, wherein the tilt support part (72b) is located on the panel bracket (22) rearward of the support part (72) and at a lower level.
